(19) Europäisches Patentamt
European Patent Office
Office européen des brevets

(11) Publication number: 0 202 060 B1

# (12) EUROPEAN PATENT SPECIFICATION

(45) Date of publication of patent specification: 12.07.89

(51) Int. Cl.$^4$: C 08 F 210/18, C 08 F 4/68

(21) Application number: 86303393.2

(22) Date of filing: 02.05.86

## (54) Use of silicate as chain branching suppressor in EPDM production.

(30) Priority: 03.05.85 US 729925

(43) Date of publication of application:
20.11.86 Bulletin 86/47

(45) Publication of the grant of the patent:
12.07.89 Bulletin 89/28

(84) Designated Contracting States:
DE FR IT NL

(56) References cited:
US-A-3 271 376

(73) Proprietor: EXXON CHEMICAL PATENTS INC.
200 Park Avenue
Florham Park New Jersey 07932 (US)

(72) Inventor: Cozewith, Charles
264 West Dudley Avenue
Westfield New Jersey 07090 (US)
Inventor: Datta, Sudhin
30 Briarwood Drive
Matawan New Jersey 07747 (US)

(74) Representative: Dew, Melvyn John et al
Esso Chemical Ltd. Esso Chemical Research
Centre P.O. Box 1
Abingdon Oxfordshire, OX13 6BB (GB)

**The file contains technical information submitted after the application was filed and not included in this specification**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).



Courier Press, Leamington Spa, England.

## Description

Useful polymers of ethylene and propylene include the terpolymers of ethylene and propylene with a non-conjugated diene. These polymers which have incorporated therein a site of pendant unsaturation are commonly known as EPDM polymers. They have wide utility because, unlike the ethylene-propylene copolymers (EP) the EPDM polymers can be sulfur crossed linked. This characteristic is attributable to the presence of unsaturation which is lacking in the EP polymers.

While unsaturation is a desirable property in the EPDM from the standpoint of utility it is the source of problems during polymerization. An idealized EPDM polymer is devoid of any branching other than the monomeric moieties attached to the EP backbone chain as sites of pendant unsaturation. In practice, however, these sites of unsaturation are points of initiation for branching as a result of chain coupling.

While a wide range of chemical reactions can result in branching, it is especially likely when the residual olefin of the pendant group is capable of forming a tertiary carbonium ion and the Ziegler catalyst system employed to produce the polymer has considerable Lewis acid character. The branching is believed to be catalyzed by cationic species arising from the Ziegler catalyst. Olefin functionality that can form a secondary carbonium ion is also believed to be susceptible to branching in the presence of acidic catalyst, as well as olefin structures which can rearrange to tertiary or secondary ions. Consequently, for residual olefin functionality in the polymer of the generalized structure

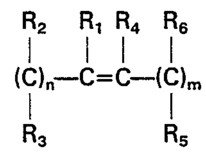

where

$n \geqslant 0$

$m \geqslant 0$

$R_1$, $R_2$, $R_3$, $R_4$, $R_5$, $R_6$=hydrogen, alkyl, cyclic or aromatic groups

cationically catalyzed branching can be expected as long as n and m are not both zero when $R_1$ and $R_4$ are both hydrogen.

Examples of the diene monomers that tend to form branched structures with acidic Ziegler catalysts are as follows:

dicyclopentadiene
5-methylene-2-norbornene
5-ethylidene-2-norbornene
tetrahydroindene
methyl tetrahydroindene
5-isopropenyl-2-norbornene
5-(2-butenyl)-2-norbornene
5-methallyl-2-norbornene
5-isopropylidene-2-norbornene
2-methyl-norbornadiene

Excessive branching yields polymers with undesirably high bulk viscosity. Additionally, the corresponding vulcanizates have inferior physical properties. Furthermore, branching can also lead to unstable reactor operations during polymerization resulting in undesirable product quality variability.

The Ziegler catalyst systems employed to produce ethylene copolymers and terpolymers generally comprise a vanadium compound catalyst and an aluminum compound cocatalyst. The preferred vanadium compounds of the prior art include halides, oxyhalides, and vanadates including dihalovanadates.

GB—A—1,132,662 discloses a suitable EP catalyst which utilizes a vanadium compound of the formula

$$VX_4 \text{ or } VOX_3$$

wherein X is halogen, alkyl, cycloalkyl or alkoxy. The vanadium compound is utilized in conjunction with a cocatalyst prepared by reacting an aluminum sesquihalide with an organic hydroxy compound.

GB—A—1,275,641 discloses a catalyst system for the preparation of polymers and copolymers of olefins which comprises a titanium or vanadium compound which can be a halide, oxyhalide or haloalkoxy compound of vanadium or titanium.

The cocatalyst is a compound of the formula

$$X_{m-n}M(OR)_n,$$

wherein X is a monovalent inorganic radical, R is a monovalent hydrocarbon radical, M is a metal belonging to Groups Ia, IIa, IIb, IIIb and VIIa of the Periodic Table or boron, m is the valence of M and n is an integer such that $1 \leq n \leq m$.

US—A—3,288,768 discloses the catalyst system for the production of copolymers of alphaolefins which comprises (1) a vanadium chloride or oxychloride, (2) an alkyl aluminum dihalide and (3) a dialkyl aluminum alkoxide.

US—A—3,597,367 discloses a catalyst system for the preparation of alpha-olefin copolymers comprising a vanadium oxychloride or a vanadium haloalkoxide, an aluminum borohydride and a Lewis acid.

US—A—3,567,653 discloses a catalyst useful for the copolymerization of ethylene and higher alpha-olefins comprising an alkyl aluminum and the reaction product of a vanadium compound and an alkyl titanate. The vanadium compound can be $VOCl_3$ or an alkylvanadate. US—A—3,780,005 discloses a similar catalyst wherein the catalyst is the reaction product of a vanadium oxychloride or tetrachloride with an aluminum alkoxide.

US—A—3,048,574 discloses the preparation of an alpha-olefin polymerization catalyst by reacting a Group I—VII compound with an organoxysilane.

US—A—3,271,376 discloses a catalyst system for the preparation of the reaction products of vanadium oxytrichloride or vanadium tetrachloride, an alkyl aluminum dihalide, and an alkoxy silane.

None of these prior art catalyst systems containing alkoxides are directed toward producing EPDM with reduced branching.

It is known to reduce branching during ethylene terpolymer polymerization by the addition of a Lewis base, e.g. $NH_3$, to the polymerization medium. While the Lewis base is effective to reduce branching it, too, reduces catalyst reactivity and efficiency. What is needed is a method for effectively eliminating branching during the preparation of ethylene/alphaolefin/non - conjugated diolefin terpolymers while at the same time not otherwise changing the characteristics of the catalyst system being used.

It has been surprisingly found that alkoxy silanes can be used to substantially reduce branching during ethylene terpolymer (EPDM) polymerization. Branching is suppressed without any effect on catalyst efficiency or reactivity.

Thus according to the present invention there is provided a solution polymerization process for the preparation of an EPDM using a hydrocarbon soluble vanadium compound as catalyst in conjunction with an aluminum compound cocatalyst and a chain branching suppressor characterised in that the chain branching suppressor comprises a silicate compound of the general formula

$$Si(OR)_xL_y$$

wherein x is 3 or 4, L is halogen, hydrogen, or R; y is 4−x, and R is a hydrocarbyl moiety.

The catalyst used in EPDM polymerization is generally a vanadium halide or vanadium oxychloride. A cocatalyst is generally an alkyl aluminum halide, e.g., aluminum sesquihalide or dialkyl aluminum halide. The alkoxy silanes suitable for use in the practice of this invention have the general formula

$$Si(OR)_xL_y$$

wherein x is 3 or 4, y=4−x, R is a hydrocarbyl moiety and L is halogen, hydrogen or R. The amount of silicate required to effectively suppress branching will vary depending on polymerization conditions and catalyst system utilized. The mole ratio of silicate to aluminum is preferably 0.02 to 0.5 moles/mole.

Preferably R is an alkyl, cycloalkyl or aromatic moiety. More preferably R is $C_1$—$C_8$ alkyl, $C_6$—$C_{10}$ cycloalkyl, or a $C_6$—$C_{12}$ aromatic moiety. Most preferably R is a $C_1$—$C_4$ alkyl moiety. Illustrative non-limiting examples of R are methyl, ethyl, n-propyl, sec-butyl, cyclohexyl, phenyl or mixtures thereof. The preferred halogen is chlorine.

As used in the specification and claims the term "EPDM" means terpolymers of ethylene, an alpha-olefin and a non-conjugated diene. The non-conjugated diolefin can be straight chain, branched chain or cyclic hydrocarbon di-olefins preferably having 6 to 15 carbon atoms such as:

A. straight chain acyclic dienes such as 1,4-hexadiene and 1,6-octadiene.

B. branched chain acyclic dienes such as 5 - methyl - 1, 4 - hexadiene; 3,7 - dimethyl - 1,6 - octadiene; 3,7 - dimethyl - 1, 7 - octadiene and the mixed isomers of dihydro-myricene and dihydro-ocinene;

C. single ring alicyclic dienes such as 1,3 - cyclopentadiene; 1,4 - cyclohexadiene; 1,5 - cyclo - octadiene and 1,5 - cyclododecadiene;

D. multi-ring alicyclic fused and bridged ring dienes such as tetrahydroindene, methyl, tetrahydroindene, dicyclopentadiene; bicyclo - (2,2,1) - hepta - 2, 5 - diene; alkenyl, alkylidene, cycloalkenyl and cycloalkylidene norbornenes such as 5 - methylene - 2 - norbornene (MNB), 5 - propenyl - 2 - norbornene, 5 - isopropylidene - 2 - norbornene, 5 - (4 - cyclopentenyl) - 2 - norbornene, 5 - cyclohexylidene - 2 - norbornene, 5 - vinyl - 2 - norbornene and norbornadiene.

Of the non-conjugated dienes typically used to prepare EPDM terpolymers the preferred dienes are dicyclopentadiene, 1,4 - hexadiene, 5 - methyl - 2 - norbornene and 5 - ethylidene - 2 - norbornene. Particularly preferred diolefins are 5 - ethylidene - 2 - norbornene (ENB) and 1,4 - hexadiene.

EPDM elastomers and their general method of manufacture are well known in the art. The preferred

EPDM elastomers contain 20 to 90 weight percent ethylene, more preferably 30 to 80 weight percent ethylene, most preferably 35 to 75 weight percent ethylene.

The alpha-olefins suitable for use in the preparation of EPDM are preferably $C_3$—$C_{16}$ alpha-olefins. Illustrative non-limiting examples of such alpha-olefins are propylene, 1-butene, 1-pentene, 1-hexene, 1-octene and 1-dodecene. The alpha-olefin is generally incorporated into the EPDM polymer at 10 to 80 weight percent, more preferably at 20 to 70 weight per cent. The non-conjugated diene is preferably incorporated into the EPDM at 0.5 to 15 weight percent; more preferably 1 to 10 weight percent, e.g., 5 weight percent.

In carrying out the process of this invention the preferred catalysts are vanadium compounds with a vanadium valance of at least 3, and which are soluble in the polymerization diluent; more preferably the catalysts are $VX_4$ or an oxyvanadium compound of the general formula $VOX_n(OR')_{3-n}$ where n is an interger of 2 or 3, R' is a hydrocarbyl radical and X is halogen, preferably chlorine or bromine. Preferably R' is $C_1$—$C_{10}$ alkyl, phenyl or benzyl, more preferably R' is $C_1$—$C_4$ alkyl, e.g., methyl, ethyl or butyl. The cocatalyst utilized to prepare the active catalyst species is an aluminum compound such as $Al_2R''_3X'_3$ (alkylaluminum sesquihalides) or $AlR''_bX'_{3-b}$, wherein R'' is a hydrocarbyl moiety, X' is halogen and b is 1 to 2. While the halogen can be chlorine, bromine or iodine, the preferred halogen is chlorine. The hydrocarbyl moiety can be eg $C_1$—$C_{20}$ alkyl, cycloalkyl or aromatic group. Preferably R'' is $C_1$—$C_{10}$ alkyl or cycloalkyl, phenyl or benzyl. Most preferably R'' is $C_1$—$C_6$ alkyl. Illustrative, non-limiting examples of R'' are methyl, ethyl, n-propyl, iso-butyl, hexyl, cyclohexyl, phenyl or mixtures thereof. In its preferred embodiment the aluminum compound is a dialkyl aluminum halide or alkyl aluminum sesquihalide. More preferably the aluminum compound is diethyl aluminum chloride ("DEAC") or ethyl aluminum sesquichloride ("EASC").

While a wide range of diluents are known to be suitable for EPDM polymerization, the diluent is preferably an organic compound which is a solvent for the monomers and polymers as well as the vanadium compound. In utilizing the catalyst system of this invention the vanadium compound and aluminum compound can be utilized at a Al/V mole ratio of eg 1 to 40, preferably 2 to 20, more preferably 3 to 10, e.g., 5 to 10.

The polymerization reaction can be conducted at a gage pressure of eg 0 Kpa to 3000 Kpa and at any temperature suitable for Ziegler polymerization reactions. The preferred pressure range for carrying out the EPDM polymerization is 100 to 1500 Kpa, more preferably 300 to 1000 Kpa. The polymerization is preferably carried out at −20 degrees C to 150 degrees C, more preferably 10 degrees C to 100 degrees C, most preferably 15 degrees C to 60 degrees C.

It is within the scope of this invention to incorporate hydrogen as a feed stream to moderate polymer molecular weight. The hydrogen is added at 0 to 30 mole percent based on the total monomer.

The silicates of this invention can be utilized at lower concentration than the prior art branching suppressors and have the added advantage of allowing the use of less aluminum compound cocatalyst. The particular amount of silicate required to suppress branching will depend on the nature of the silicate, the diolefin, the catalyst system, the Al/V ratio and the polymerization conditions. Generally eg 0.02 to 0.5 moles of silicate to moles of aluminum can be used; preferably 0.04 to 0.3 mol/mol are used. The efficacious amount of silicate needed for a given set of polymerization conditions can readily be determined by experiments using the technique described in the examples, *infra*. Increasing amounts of silicate compound are added to the polymerization reactor and the degree of long chain branching in the polymer is measured. The silicate concentration that just reduces branching to a minimum is the optimum amount. The use of excessive amounts of silicates will result in reduced catalyst activity. The silicate concentration can also be expressed in terms of Si/V mole ratio and can vary eg from 0.1 to 3.0; preferably 0.3 to 2.0; more preferably 0.6 to 1.5, e.g. 0.4 to 1.0.

The vanadium and aluminum compounds can be added to the reactor either separately or premixed with one another. However, it is preferred that the silicate be added to the reactor separately and not in combination with any of the catalyst components.

The advantages of the instant invention may be more readily appreciated by reference to the following examples. In the examples the polymerization was carried out in a liquid filled, continuous, stirred tank polymerization reactor. Reactor residence time was 13 minutes and polymerization temperature was 32 degrees C unless otherwise specified.

Ethylene, propylene and 5 - ethylidene - 2 - norbornene (ENB) were fed to the reactor in a hexane solution. Conventional precautions were taken to purify all reactor feed streams so that air, moisture, and other catalyst poisons did not enter the reactor in significant amounts. Catalyst, cocatalyst and silicate were pumped into the reactor as dilute solutions in hexane. Hydrogen was fed as a gas to control polymer molecular weight.

At the exit of the reactor the polymerization was quenched by mixing water with the polymer solution. Polymer was recovered by adding the solution to a tank of hot water sparged with steam to strip off the solvent and unreacted monomers. The wet polymer was then dried on a hot rubber mill.

Polymerization rate was determined by weighing the amount of rubber obtained in a fixed time period. Monomer conversion and catalyst efficiency (weight of polymer product/wt. vanadium catalyst fed) were determined to characterize the catalyst activity. Infrared analysis (ASTM D3900) was used to measure polymer ethylene content while refractive index (I. J. Gardner & G. Ver Strate, *Rubber Chem Tech, 46*, 1019 (1973)) was used for ENB content. Polymer Mooney viscosity was measured by ASTM-D1646.

Molecular weight (number average, $M_n$; weight average, $M_w$; z average, $M_z$) and molecular weight distribution (MWD) were measured using a Waters 150 gel permeation chromatograph equipped with a Chromatix KMX-6 on-line light scattering photometer. The system is used at 135 degrees C with 1,2,4 - trichlorobenzene as the mobile phase. Showadex (Showa-Denko America, Inc.) polystyrene gel columns 802, 803, 804 and 805 were used. The technique utilized is described in *Liquid Chromatography of Polymers and Related Materials III*, J. Cazes, editor, Marcel Dekker, 1981, p. 257. No corrections for column spreading are employed; however, data on generally accepted standards, e.g., National Bureau of Standards Polyethylene 1484 and anionically produced hydrogenated polyisoprene demonstrate that such corrections on $M_w/M_n$ or $M_z/M_w$ are less than 0.05 units. $M_w/M_n$ was calculated from an elution time-molecular weight relationship whereas $M_z/M_w$ is evaluated using the light scattering photometer. The $M_w/M_n$ are used as an indication of MWD breadth (the larger the value, the broader the MWD).

The degree of branching in the EPDM was ascertained by measuring the solubility of non-crystalline terpolymer samples. Polymers with no or low amounts of branching will dissolve completely in hexane at 25 degree C. When extensive branching has taken place, some fraction of the polymer is usually branched beyond the gel point and swells but does not dissolve in the solvent. The quantity of the gel fraction is taken to indicate the relative amount of long chain branching.

To measure the quantity of gel, about 2 grams of polymer was placed in a jar containing about 250 ml of n-hexane and allowed to stand for two weeks at ambient temperature with occasional gentle swirling during that period. Undissolved polymer was recovered by decanting the jar contents into a tared 3 g µm (350 mesh) stainless steel screen which was then placed in a vacuum oven held at 60 degrees C. After 12 hours of drying to evaporate the solvent the screen was reweighed to determine the amount of undissolved polymer. The ratio of the weight of undissolved polymer to original polymer charge is the fraction of gel.

In the following examples polymerization was started with no or low feed of silicate compound to the reactor. After providing sufficient time to achieve steady state, a polymer sample was collected for analysis and the polymerization rate measured. The flow rate of silicate was then initiated or increased, and the reactor again allowed to reach steady state. A second polymer sample was obtained for analysis. This procedure was followed for several different levels of silicate feed rate. All other polymerization conditions were held constant for an experiment. The polymerization data is shown in Table I.

Example 1

A control polymerization using the conditions shown in Table I was carried out using $VOCl_3$/ethyl aluminum sesquichloride (EASC) as the catalyst system. No silicate was added. The polymer contained 19% gel. Because of the large amount of insoluble fraction, molecular weight distribution could not be measured accurately by GPC analysis. Polymerization data are shown in Table II.

Example 2

Example 1 was repeated but ethyl silicate ($Si(OEt)_4$) was added to the reactor. As seen from Table II the Mooney viscosity of the polymer dropped as the silicate feed rate was increased. At Si/V ratio of 0.75, gel content was 5% as compared to 19% for the control. Catalyst efficiency and propylene conversion are slightly reduced relative to the control. Raising the Si/V ratio from 0.75 to 1.0 has a deleterious effect on catalyst activity without significantly reducing branching further.

Example 3

Example 1 was repeated except that methyl silicate ($Si(OMe)_4$) was added to the reactor. As the silicate level was increased the polymer molecular weight dropped and the MWD breadth narrowed, as shown by the $M_w/M_n$ ratio, indicating that branching was being eliminated. At an Si/V ratio of 1.0 the amount of gel was reduced to 3% without significant loss in catalyst activity relative to the control of Example 1. See Table II.

Example 4

A control experiment using the conditions shown in Table III was run carrying out the polymerization using $VCl_4$/ethyl aluminum sesquichloride as the catalyst system in the absence of silicate. The gel content of the polymer was 46% and the Mooney was quite high (Ca 100). The results are shown in Table II.

Examples 5—8

Example 4 was repeated varying the quantity and type of silicate used as the chain branching suppressor. In all cases at ratios of 0.5 to 1 mole Si/mole V gave polymers of narrow MWD with gel content of less than 2 wt%. As shown in Table II at these silicate levels the detrimental effect on catalyst activity was minimal.

Example 9

The procedure of Example 1 was repeated with ethyl aluminum dichloride as cocatalyst and $VOCl_3$ as the catalyst.

Reactor temperature was 30°C and residence time was 13 minutes. Feed rates were as follows:
ethylene=2.53 g/100 g hexane
propylene=12.0 g/100 g hexane
$VOCl_3$=.0067 g/100 g hexane

In the initial run, at an Al/V ratio of 10 and an ENB feed of 0.15 g/100 g hexane, a polymer containing about 4 wt% ENB was produced. However, severe gellation occurred in the reactor leading to an extremely viscous polymer solution. Reactor operation was unsteady and no polymerization data could be obtained. ENB feed rate was halved, giving an improvement in reactor operability and producing a polymer with 2.3 wt% ENB. This polymer contained 28% gel (see Table II). $Si(OEt)_4$ was then fed to the reactor and the Al/V ratio was reduced to 6. As shown in Table II, the addition of $Si(OEt)_4$ lowered polymer Mooney viscosity, narrowed MWD, and at a Si/V ratio of 0.5 mol/mol reduced the gel content to 4.7%. Surprisingly, the use of $Si(OEt)_4$ also led to improved catalyst efficiency and propylene conversion.

Example 10

A comparison experiment was run to demonstrate the effectiveness of silicates as branching suppressors as compared with the prior art branching suppressor, ammonia, a Lewis base. The polymerization was carried out with $VOCl_3$/ethyl aluminum sesquichloride (EASC) catalyst system using ammonia in one instance (Case A) and $Si(OEt)_4$ in the other (Case B). The details of the polymerization and polymer characterization are shown in Table IV. The experiments were run identically except that in Case B the propylene feed was decreased to compensate for the higher reactivity of propylene when $Si(OEt)_4$ is used as the branching suppressor. Also, the Al/V ratio was reduced from 6 to 5 with the addition of $Si(OEt)_4$. The polymers produced were essentially identical but the use of $Si(OEt)_4$ instead of $NH_3$ resulted in a 20% improvement in propylene conversion.

Example 11

That the silicates of this invention have only a minor effect on polymerization catalyst efficiency or activity was demonstrated by carrying out an ethylenepropylene copolymerization in the absence of ENB with increasing levels of $Si(OEt)_4$. As shown in Table V, incremental additions of silicate up to 0.5 Si/V do not significantly disturb any of the catalyst activity or propylene conversion.

TABLE I

Conditions for polymerization $VOCl_3$—$Et_3Al_2Cl_3$

| | |
|---|---|
| Temperature | 32(°C) |
| Residence time | 13 min. |
| Al/V molar ratio | 5 |
| Pressure | 500 kpa |
| Reactor feeds | |
| Ethylene | 2.53 g/100 g hexane |
| Propylene | 12.0 g/100 g hexane |
| ENB | 0.29 g/100 g hexane |
| Hydrogen | 60 wppm on ethylene |
| $VOCl_3$ | .0075 g/100 g hexane |
| Hexane | 2.66 kg/hour |
| Ammonia, TEOS | See text |

TABLE II

| Example | Catalyst | CoCat | Silicate[1] | Al/V mol/mol | Si/V mol/mol | Cat.[2] eff. | Prop.[3] conv. % | Polymer composition, wt% | | Mooney[4] visc. | Gel (%) | Mw/Mn |
|---|---|---|---|---|---|---|---|---|---|---|---|---|
| | | | | | | | | Ethylene | ENB | | | |
| 1 | $VOCl_3$ | EASC | None | 5 | 0 | 652 | 23 | 49 | 5.1 | 91 | 19 | — |
| 2 | $VOCl_3$ | EASC | $Si(OEt)_4$ | 5 | .25 | 595 | 21 | 44 | 5.2 | 81 | 10 | 2.33 |
| | | | | | .75 | 561 | 20 | 46 | 5.1 | 48 | 5.0 | 2.39 |
| | | | | | 1.0 | 473 | 14 | 51 | 5.5 | 43 | 4.9 | |
| 3 | $VOCl_3$ | EASC | $Si(OMe)_4$ | 5 | .25 | 620 | 22 | 44 | 5.4 | 78 | 8.8 | |
| | | | | | .50 | 600 | 21 | 44 | 5.3 | 58 | 28.8 | 6.2 |
| | | | | | 1.0 | 625 | 22 | 44 | 5.2 | 37 | 3.0 | |
| | | | | | 1.5 | 489 | 14 | 53 | 5.5 | 30 | 1.0 | 1.86 |
| | | | | | 2.0 | 357 | 9 | 61 | 5.9 | 23 | 3.3 | |
| 4 | $VCl_4$ | EASC | None | 5 | 0 | 928 | 21 | 45 | 4.4 | 100 | 46.0 | — |
| 5 | $VCl_4$ | EASC | $Si(OEt)_4$ | 5 | .16 | 932 | 21 | 44 | 5.0 | 61 | 17.0 | 4.77 |
| | | | | | .50 | 938 | 22 | 43 | 5.7 | 60 | 0 | 2.52 |
| | | | | | .75 | 942 | 22 | 43 | 5.1 | 58 | 0 | |
| | | | | | 1.5 | 896 | 21 | 43 | 5.2 | 50 | .5 | |
| 6 | $VCl_4$ | EASC | $Si(OMe)_4$ | 5 | .25 | 892 | 21 | 45 | 6.0 | 69 | 6.8 | |
| | | | | | .37 | 910 | 21 | 44 | 5.0 | 61 | 3.1 | |
| | | | | | .50 | 920 | 22 | 44 | 5.2 | 61 | | |
| | | | | | 1.0 | 944 | 22 | 47 | 5.5 | 58 | .80 | |
| | | | | | 1.5 | 896 | 20 | 43 | 5.2 | 55 | .42 | 1.85 |

TABLE II Continued

| Example | Catalyst | CoCat | Silicate[1] | Al/V mol/mol | Si/V mol/mol | Cat.[2] eff. | Prop.[3] conv. % | Polymer composition, wt% Ethylene | ENB | Mooney[4] visc. | Gel (%) | Mw/Mn |
|---|---|---|---|---|---|---|---|---|---|---|---|---|
| 7 | $VCl_4$ | EASC | $PhSi(OEt)_3$ | 5 | .16 | 952 | 22 | 43 | 4.4 | 51 | | |
| | | | | | .25 | 942 | 22 | 44 | | 62 | | |
| | | | | | .50 | 914 | 21 | 41 | | 55 | 2.7 | 3.9 |
| 8 | $VCl_4$ | EASC | $ClSi(OEt)_3$ | 5 | .16 | 842 | 19 | 45 | 5.5 | 90 | 9.6 | 1.9 |
| | | | | | .50 | 808 | 18 | 45 | 5.3 | 87 | 2.4 | 1.9 |
| | | | | | .75 | 876 | 20 | 43 | 5.1 | 71 | 1.7 | 2.0 |
| | | | | | 1.5 | 830 | 19 | 44 | 5.5 | 59 | 0 | |
| 9 | $VOCl_3$ | EADC | None | 10 | 0 | 536 | 15 | 49 | 2.3 | 113 | 28 | 7.5 |
| | | | $Si(OEt)_4$ | 6 | .25 | 610 | 17 | 48 | 1.6 | 81 | | |
| | | | $Si(OEt)_4$ | 6 | .50 | 630 | 18 | 47 | 1.7 | 65 | 4.7 | 2.7 |

(1) $Si(OEt)_4$=ethyl silicate
$Si(OMe)_4$=methyl silicate
$PhSi(OEt)_3$=triethoxy phenyl silane
$CiSi(OEt)_3$=triethoxy chloro silane
(2) Cat. Eff.=Catalyst efficiency, wt. polymer produced/wt. catalyst fed.
(3) Prop. Conv.=Propylene conversion, (wt. propylene reacted/wt. propylene fed)×100%.
(4) Mooney viscosity conditions=small rotor ($M_S$) at 127°C.

TABLE III

Conditions for polymerization: $VCl_4$-EASC

| | |
|---|---|
| Temperature | 32(°C) |
| Residence time | 13 min. |
| Al/V molar ratio | 5 |
| Pressure | 500 kpa |
| Reactor feeds | |
| Ethylene | 2.53 g/100 g hexane |
| Propylene | 12.0 g/100 g hexane |
| ENB | 0.29 g/100 g hexane |
| $VCl_4$ | .005 g/100 g hexane |
| Hexane | 2.66 kg/hr. |
| Hydrogen | 60 wppm on Ethylene |
| Ammonia, TEOS | See text |

TABLE IV

| | A | B |
|---|---|---|
| Temperature, degrees C | 35 | 35 |
| Residence time (min) | 10.1 | 10.1 |
| Feeds (g/100 g of hexane) | | |
| Catalyst: $VOCl_3$ | .0085 | .0085 |
| Cocatalyst: EASC (Al/V molar ratio) | 6 | 5 |
| Ethylene | 3.56 | 3.56 |
| Propylene | 8.00 | 6.50 |
| 5-Ethylidene-2-norbornene (ENB) | 0.259 | 0.259 |
| Ammonia (N/V molar ratio) | 2.0 | 0.0 |
| $Si(OEt)_4$ (Si/V molar ratio) | 0.0 | 0.6 |
| $H_2$ (g/$10^6$ g of ethylene) | 90 | 90 |
| Polymer characterization | | |
| ML 127 (1+8)[1] | 56 | 53 |
| Ethylene content (wt%) | 52.8 | 52.3 |
| ENB content (wt%) | 4.25 | 4.25 |
| Process details | | |
| $C_2$=Conversion (%) | 85 | 80 |
| $C_3$=Conversion (%) | 30 | 36 |
| Catalyst efficiency (g polymer/g of $VCl_4$) | 670 | 640 |

[1]Mooney viscosity conditions (ML)=large rotor at 127 degrees C.

TABLE V
Effect of TEOS on $VCl_4$-EASC system (copolymer)

| Run # | Si/V | $C_2$ wt% | $M_s$ 127[1] | CE[2] | $C_3$ Conv.[3] |
|---|---|---|---|---|---|
| 1 | 0.0 | 40 | 49 | 1020 | 26 |
| 2 | 0.16 | 40 | 59 | 1040 | 26 |
| 3 | 0.25 | 40 | 48 | 1020 | 25 |
| 4 | 0.50 | 40 | 63 | 1000 | 25 |

[1]Mooney viscosity conditions=small rotor ($M_s$) at 127°C.
[2]Catalyst efficiency=wt. of polymer produced/wt. of catalyst fed.
[3]$C_3$ conv.=Propylene conversion: (wt. of propylene reacted/wt. of propylene fed)×100%.

## Claims

1. A solution polymerization process for the preparation of an EPDM using a hydrocarbon soluble vanadium compound as catalyst in conjunction with an aluminum compound cocatalyst and a chain branching suppressor characterised in that the chain branching suppressor comprises a silicate compound of the general formula

$$Si(OR)_xL_y$$

wherein x is 3 or 4, L is halogen, hydrogen, or R; y is 4−x, and R is a hydrocarbyl moeity.

2. The process according to claim 1 wherein R is an alkyl, cycloalkyl or aromatic moiety.

3. The process according to claim 2 wherein R is methyl, ethyl or phenyl.

4. The process according to claim 1, 2 or 3 wherein x is 3 and L is chlorine.

5. The process according to claim 1, 2, 3 or 4 wherein the silicate compound is tetramethoxysilane, tetraethoxysilane, phenyltriethoxysilane or chlorotriethoxysilane.

6. The process according to any one of the preceding claims wherein the vanadium compound has a vanadium valence of at least 3.

7. The process according to any one of the preceding claims wherein the silicate and vanadium compounds are utilised at an Si/V mole ratio of 0.1 to 3.0.

8. The process according to any one of the preceding claims wherein the vanadium compound is $VX_4$ or $VOX_n(OR')_{3-n}$ wherein X is halogen, R' is a hydrocarbyl moiety and n is 2 or 3.

9. The process according to claim 8 wherein X is chlorine or bromine.

10. The process according to claim 8 or 9 wherein R' is $C_1$—$C_{10}$ alkyl or cycloalkyl, phenyl or benzyl.

11. The process according to any one of the preceding claims wherein the aluminum compound is an alkyl aluminum sesquihalide or a compound of the formula $AlR''_bX'_{3-b}$ wherein X' is halogen, R'' is a hydrocarbyl moiety and b is 1 or 2.

12. The process according to claim 11 wherein R'' is $C_1$—$C_4$ alkyl, hexyl, cyclohexyl or phenyl, or wherein the alkyl group of the alkyl aluminum sesquihalide is methyl, ethyl or isobutyl.

13. The process according to claim 11 or 12 wherein X' is chlorine or bromine.

14. The process according to claim 8 wherein the vanadium compound is $VOCl_3$, the aluminum compound is ethyl aluminum sesquichloride, the silicate is tetraethoxysilane and the mole ratio of silicate to vanadium compound based on silicon and vanadium (Si/V) is from 0.6 to 1.5.

15. The process according to claim 8 wherein the vanadium compound is $VCl_4$ and the aluminum compound is ethylaluminum sesquichloride.

16. The process according to claim 15 wherein the silicate compound is tetramethoxysilane or tetraethoxysilane and the silicate and vanadium compounds are utilised at an Si/V mole ratio of from 0.1 to 3.0.

17. The process according to any one of the preceding claims wherein the EPDM comprises ethylene, propylene and a termonomer wherein the termonomer is ENB or 1,4-hexadiene, dicyclopentadiene or methylene norbornene.

18. The process according to any one of the preceding claims further characterised in that hydrogen is used as a molecular weight modifier.

19. The use of a silicate compound of formula $Si(OR)_xL_y$ (wherein x=3 or 4, L is halogen, hydrogen or R, y=4−x and R is a hydrocarbyl moiety) as a chain branching suppressor in polymerization reactions for producing EPDM which employ a vanadium compound catalyst and an aluminum compound cocatalyst.

**Patentansprüche**

1. Polymerisationsverfahren in Lösung für die Herstellung eines EPDM-Polymeren unter Verwendung einer kohlenwasserstofflöslichen Vanadiumverbindung als Katalysator in Verbindung mit einer Aluminiumverbindung als Cokatalysator und einem Mittel für die Unterdrückung von Kettenverzweigungen, dadurch gekennzeichnet, daß das Mittel für die Unterdrückung von Kettenverzweigungen eine Silicatverbindung der allgemeinen Formel

$$Si(OR)_xL_y$$

enthält, in der x 3 oder 4 ist, L Halogen, Wasserstoff oder R ist; y 4−x ist und R ein Kohlenwasserstoffanteil ist.

2. Verfahren nach Anspruch 1, bei dem R ein Alkyl-, Cycloalkyl- oder ein aromatischer Anteil ist.

3. Verfahren nach Anspruch 2, bei dem R Methyl, Ethyl oder Phenyl ist.

4. Verfahren nach Anspruch 1, 2 oder 3, bei dem x gleich 3 und L Chlor ist.

5. Verfahren nach Anspruch 1, 2, 3 oder 4, bei dem die Silicatverbindung Tetramethoxysilan, Tetraethoxysilan, Phenyltriethoxysilan oder Chlortriethoxysilan ist.

6. Verfahren nach einem der vorhergehenden Ansprüche, bei dem die Vanadiumverbindung eine Vanadium-Valenz von wenigstens 3 hat.

7. Verfahren nach einem der vorhergehenden Ansprüche, bei dem die Silikat- und Vanadiumverbindungen in einem Molverhältnis von Si/V von 0,1 zu 3,0 eingesetzt werden.

8. Verfahren nach einem der vorhergehenden Ansprüche, bei dem die Vanadiumverbindung $VX_4$ oder $VOX_n(OR')_{3-n}$ ist, worin X Halogen ist, R' ein Kohlenwasserstoffanteil ist und n 2 oder 3 ist.

9. Verfahren nach Anspruch 8, bei dem X Chlor oder Brom ist.

10. Verfahren nach Anspruch 8 oder 9, bei dem R' $C_1$—$C_{10}$-Alkyl oder -Cycloalkyl, Phenyl oder Benzyl ist.

11. Verfahren nach einem der vorhergehenden Ansprüche, bei dem die Aluminiumverbindung ein Alkylaluminium - Sesquihalogenid oder eine Verbindung der Formel $AlR''_bX'_{3-b}$ ist worin X' Halogen ist, R'' ein Kohlenwasserstoffanteil ist und b 1 oder 2 ist.

12. Verfahren nach Anspruch 11, bei dem R'' $C_1$—$C_4$-Alkyl, Hexyl, Cyclohexyl oder Phenyl ist oder bei dem die Alkylgruppe des Alkylaluminium - Sesquihalogenids Methyl, Ethyl oder Isobutyl ist.

13. Verfahren nach Anspruch 11 oder 12, bei dem X' Chlor oder Brom ist.

14. Verfahren nach Anspruch 8, bei dem die Vanadiumverbindung $VOCl_3$ ist, die Aluminiumverbindung Ethylaluminium - Sesquichlorid ist, das Silikat Tetraethoxysilan ist und das Molverhältnis von Silikat zu Vanadiumverbindung basierend auf Silicium und Vanadium (Si/V) zwischen 0,6 und 1,5 liegt.

15. Verfahren nach Anspruch 8, bei dem die Vanadiumverbindung $VCl_4$ ist und die Aluminiumverbindung Ethylaluminium - Sesquichlorid ist.

16. Verfahren nach Anspruch 15, bei dem die Silikatverbindung Tetramethoxysilan oder Tetraethoxysilan ist und die Silikat- und Vanadiumverbindungen in einem Molverhältnis Si/V von 0,1 bis 3,0 eingesetzt wird.

17. Verfahren nach einem der vorhergehenden Ansprüche, bei dem das EPDM-Polymer Ethylen, Propylen und ein Termonomer enthält, wobei das Termonomer ENB ist oder 1,4-Hexadien, Dicyclopentadien oder Methylen-Norbornen.

18. Verfahren nach einem der vorhergehenden Ansprüche, das weiter dadurch gekennzeichnet ist, daß Wasserstoff als Mittel zum Modifizieren des Molekulargewichts verwendet wird.

19. Verwendung einer Silikatverbindung der Formel $Si(OR)_xL_y$ (in der x=3 oder 4 ist, L Halogen, Wasserstoff oder R ist, y=4−x und R ein Kohlenwasserstoffanteil ist) als Mittel für die Unterdrückung von Kettenverzweigungen in Polymerisationsreaktionen zur Herstellung von EPDM-Polymeren bei denen eine Vanadiumverbindung als Katalysator und eine Aluminiumverbindung als Cokatalysator verwendet werden.

**Revendications**

1. Procédé de polymérisation en solution pour la préparation d'un EPDM en utilisant un composé de vanadium soluble dans l'hydrocarbure comme catalyseur conjointement avec un composé d'aluminium comme cocatalyseur et un suppresseur de ramification, caractérisé en ce que le suppresseur de ramification comprend un silicate de formule générale

$$Si(OR)_xL_y$$

dans laquelle x a la valeur 3 ou 4, L est un halogène, l'hydrogène ou R; y a la valeur 4−x et R est un groupement hydrocarbyle.

2. Procédé suivant la revendication 1, dans lequel R est un groupement alkyle, cycloalkyle ou aromatique.

3. Procédé suivant la revendication 2, dans lequel R est un groupe méthyle, éthyle ou phényle.

4. Procédé suivant la revendication 1, 2 ou 3, dans lequel x a la valeur 3 et L est le chlore.

5. Procédé suivant la revendication 1, 2, 3 ou 4, dans lequel le silicate est le tétraméthoxysilane, le tétraéthoxysilane, le phényltriéthoxysilane ou le chlorotriéthoxysilane.

6. Procédé suivant l'une quelconque des revendications précédentes, dans lequel le composé de vanadium a une valence du vanadium d'au moins 3.

7. Procédé suivant l'une quelconque des revendications précédentes, dans lequel le silicate et le composé de vanadium sont utilisés dans un rapport molaire Si/V et 0,1 à 3,0.

8. Procédé suivant l'une quelconque des revendications précédentes, dans lequel le composé de vanadium répond à la formule $VX_4$ ou $VOX_n(OR')_{3-n}$ dans laquelle X est un halogène, R' est un groupement hydrocarbyle et n a la valeur 2 ou 3.

9. Procédé suivant la revendication 8, dans lequel X est le chlore ou le brome.

10. Procédé suivant la revendication 8 ou 9, dans lequel R' est un groupe alkyle en $C_1$ à $C_{10}$ ou cycloalkyle, phényle ou benzyle.

11. Procédé suivant l'une quelconque des revendications précédentes, dans lequel le composé d'aluminium est un sesquihalogénure d'alkylaluminium ou un composé de formule $AlR''_bX'_{3-b}$ dans laquelle X' est un halogène, R'' est un groupement hydrocarbyle et b a la valeur 1 ou 2.

12. Procédé suivant la revendication 11, dans lequel R'' est un groupe alkyle en $C_1$ à $C_4$, hexyle, cyclohexyle ou phényle ou bien le groupe alkyle du sesquihalogénure d'alkylaluminium est un groupe méthyle, éthyle ou isobutyle.

13. Procédé suivant la revendication 11 ou 12, dans lequel X' est le chlore ou le brome.

14. Procédé suivant la revendication 8, dans lequel le composé de vanadium est $VOCl_3$, le composé d'aluminium est le sesquichlorure d'éthylaluminium, le silicate est le tétraéthoxysilane et le rapport molaire du silicate au composé de vanadium sur la base du silicium et du vanadium (Si/V) est de 0,6 à 1,5.

15. Procédé suivant la revendication 8, dans lequel le composé de vanadium est $VCl_4$ et le composé d'aluminium est le sesquichlorure d'éthylaluminium.

16. Procédé suivant la revendication 15, dans lequel le silicate est le tétraméthoxysilane ou le tétraéthoxysilane et le silicate et le composé de vanadium sont utilisés dans un rapport molaire Si/V de 0,1 à 3,0.

17. Procédé suivant l'une quelconque des revendications précédentes, dans lequel l'EPDM comprend de l'éthylène, du propylène et un termonomère, le termonomère étant l'ENB ou le 1,4-hexadiène, le dicyclopentadiène ou le méthylènenorbornène.

18. Procédé suivant l'une quelconque des revendications précédentes, caractérisé en outre en ce que le l'hydrogène est utilisé comme modificateur de poids moléculaire.

19. Utilisation d'un silicate de formule $Si(OR)_xL_y$ (dans laquelle x est égal à 3 ou 4, L est un halogène, l'hydrogène ou R, y a la valeur 4−x et R est un groupement hydrocarbyle) comme suppresseur de ramification dans des réactions de polymérisation pour la production d'EPDM, qui utilisent un catalyseur formé d'un composé de vanadium et un cocatalyseur formé d'un composé d'aluminium.